Europäisches Patentamt

European Patent Office

Office européen des brevets

(11) Publication number: **0 039 182**
**B1**

(12) **EUROPEAN PATENT SPECIFICATION**

(45) Date of publication of patent specification: **12.10.88**

(51) Int. Cl.⁴: **F 02 B 37/00, F 02 B 67/02**

(21) Application number: **81301692.0**

(22) Date of filing: **16.04.81**

(54) Internal combustion engine with turbo-charger apparatus.

(30) Priority: **25.04.80 JP 54351/80**
**25.04.80 JP 55987/80**

(43) Date of publication of application:
**04.11.81 Bulletin 81/44**

(45) Publication of the grant of the patent:
**12.10.88 Bulletin 88/41**

(84) Designated Contracting States:
**DE FR GB**

(56) References cited:
**CH-A- 117 044**
**DE-B-1 225 441**
**DE-C- 407 141**
**DE-C- 975 375**
**FR-A-1 180 677**
**GB-A- 369 033**
**US-A-4 122 673**

**Motorradkatalog 1974/1975, Motor-Presse-
Verlag Stuttgart**

(73) Proprietor: **HONDA GIKEN KOGYO KABUSHIKI
KAISHA**
**27-8, Jingumae, 6-chome**
**Shibuya-ku, Tokyo 150 (JP)**

(72) Inventor: **Inoue, Kazuo**
**3-6-1, Takanodai Nerima-ku**
**Tokyo (JP)**
Inventor: **Matsuda, Minoru**
**B-606 Tsutsujigaoka Haimu, 2-13-3, Shibazaki**
**Chofu-shi Tokyo (JP)**
Inventor: **Kato, Kentaro**
**2-6-24, Kitano**
**Niiza-shi Saitama-ken (JP)**

(74) Representative: **MacFarlane, John Anthony
Christopher et al**
**HASELTINE LAKE & CO. Hazlitt House 28,
Southampton Buildings Chancery Lane
London WC2A 1AT (GB)**

# Description

This invention relates to internal combustion engine supercharger apparatus.

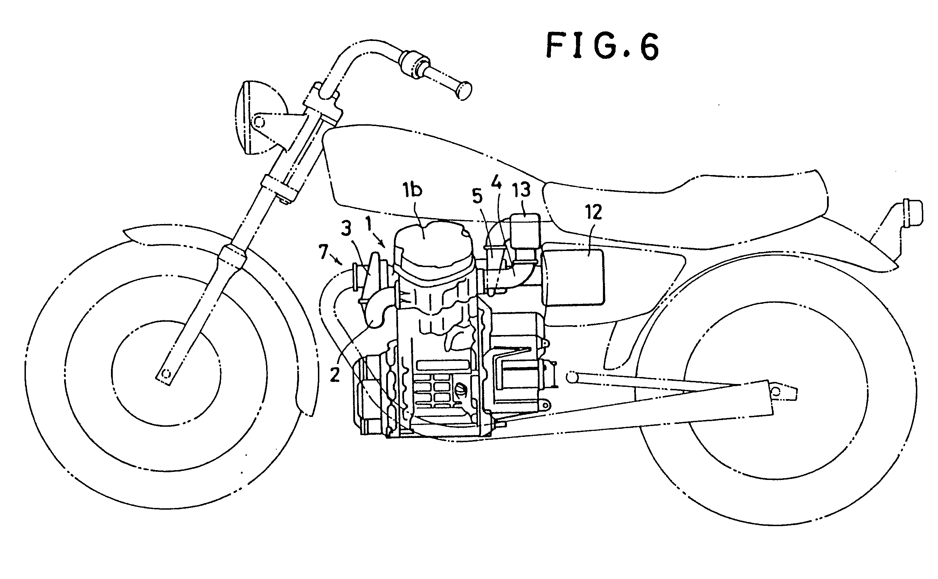

In GB—A—369033 (particularly Figure 5) there is disclosed a reciprocating internal combustion engine provided with supercharger apparatus that is a turbocharger comprising an exhaust gas driven turbine located at one side of the engine and provided in an exhaust passage of the engine, this turbine driving, via an arrangement of three in-line shafts, a compressor provided in an intake passage of the engine. A part of this shaft arrangement passes through a hole in a body of the engine, and there is a lubrication oil passage, which is in communication with this hole, provided in the body of the engine. The shaft arrangement is supported by a bearing arrangement that is external of the hole through which part of the shaft arrangement passes.

DE—C—407 141 discloses a turbocharger arrangement similar to that of GB—1—369033 and suggests the path of the exhaust gases to be as short as possible (page 2, lines 31, 32). This document further discloses the turbine to be in communication with the engine exhaust passage; and the engine to be a multi-cylinder engine with the exhaust ports of its respective cylinders in communication with the single intake opening of the turbine. Also this document discloses a bearing arrangement, for shafting interconnecting the turbine and the compressor, that is similar to that disclosed in GB—A—369033.

DE—C—975375 discloses a multi-cylinder engine having a turbine and compressor arrangement mounted in each cylinder head of the engine.

A major problem in utilising an exhaust gas driven turbine in internal combustion engine supercharger apparatus is that the higher the exhaust gas temperature, the more advantageous is the exhaust gas flow for driving the turbine, but such high temperatures adversely affect components adjacent the turbine. Separating the compressor from the turbine as in DE—C—407141 mitigates this effect on the compressor, particularly in an engine of large overall size as disclosed in 407141, but other components such as the casing of the turbine, the exhaust opening of the turbine and the engine exhaust passage remain exposed to the high temperature of the turbine. Further separation would be of lesser assistance in a smaller engine. A particular problem in a small engine is to achieve overall compactness. The bearing arrangements of GB—A—369033 and DE—C—407141, and the multi turbine/compressor arrangement of DE—C—975375, are complex and voluminous.

According to the present invention there is provided a multi-cylinder reciprocating internal combustion engine provided with supercharger apparatus comprising an exhaust gas driven turbine provided in an exhaust passage of the engine and having a single intake opening in communication with the exhaust ports of the respective cylinders of the engine, a compressor provided in an intake passage of the engine, and a lubrication oil passage provided in the body of the engine for supplying lubricating oil to shafting interconnecting the turbine and the compressor; characterised in that the turbine and the compressor are interconnected by a shaft that is disposed between two cylinders of the engine and that passes through, so as to be supported only by, a bearing hole in the body of the engine, the lubrication oil passage being in communication with this bearing hole. By utilising the bearing hole as the sole support for the shaft interconnecting the turbine and the compressor the engine is compact overall.

As described hereinafter the engine can be mounted in a vehicle such that the engine exhaust passage and the turbine are at the front, and the intake passage and the compressor at the rear, of the engine with respect to the intended direction of forward travel of the vehicle in which the engine is mounted, so that the turbine is ahead of the compressor, the turbine having its exhaust opening which is in communication with the engine exhaust passage forwardly directed. Although the turbine which is at high temperature during operation and the compressor which is at comparatively low temperature are rotated through the common shaft, as the turbine is disposed at the front of the engine and the air intake passage and the compressor therein are disposed to the rear of the engine, the intake passage and the compressor are isolated by the engine from the heat of the turbine. Furthermore, although the turbine receives the high temperature exhaust gas so as to be operated efficiently, by being disposed at the front of the engine the turbine is cooled by the air flowing during running of the vehicle, and thus the intake passage and the compressor are further protected from exposure to high temperature. By minimising the exposure of the intake passage and the compressor to high temperature the intake air amount of the engine may be substantially increased.

For a better understanding of the invention and to show how the same may be carried into effect, reference will now be made, by way of example, to the accompanying drawings, in which:—

Figure 1 is a sectional side view of supercharger apparatus in an internal combustion engine,

Figure 2 is a sectional plan view of the apparatus of Figure 1,

Figure 3 is a plan view from above illustrating another form of internal combustion engine supercharger apparatus,

Figure 4 is a front view showing the apparatus of Figure 3,

Figure 5 is a sectional side view taken along line V—V in Figure 3, and

Figure 6 is a side view illustrating engine and apparatus of Figures 3 to 5 mounted in a vehicle.

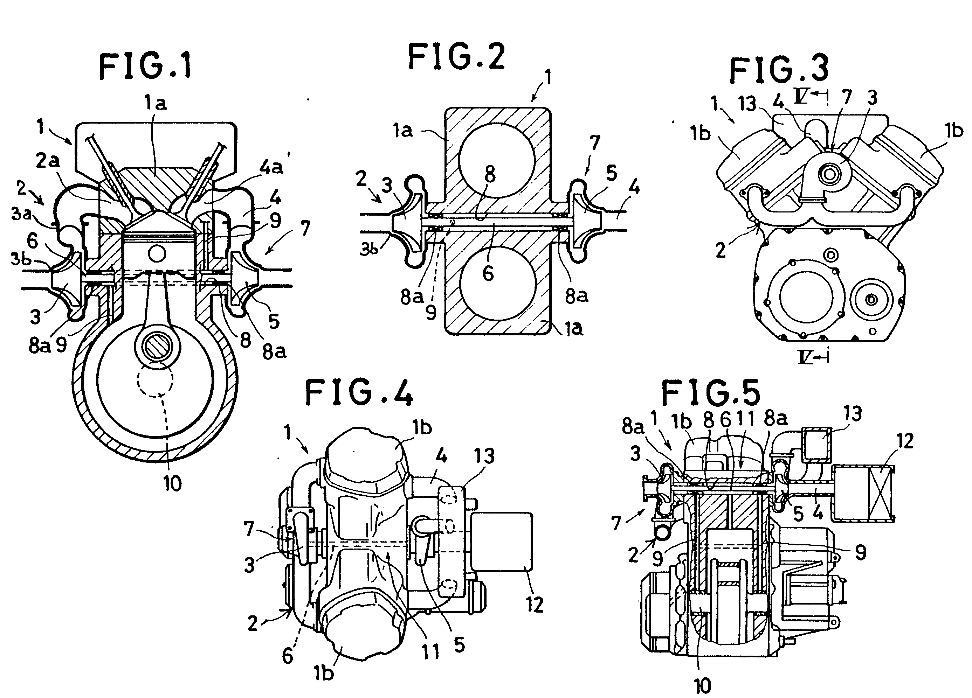

Referring first to Figures 1 and 2, numeral 1 denotes a reciprocating internal combustion engine, numeral 2 denotes an exhaust passage thereof and numeral 3 denotes an exhaust gas driven turbine provided in the exhaust passage 2. The turbine 3 is connected via a shaft 6 to a compressor 5 provided in an intake passage 4 of the engine 1 to form a supercharger 7.

The shaft 6 of the supercharger 7 is inserted through and supported by a bearing hole 8 made through a body of the engine 1. A lubrication oil passage 9 which is in communication with the bearing hole 8 is provided in the body of the engine 1 so that the lubrication oil for the engine 1 may be supplied to the bearing hole 8 in the interior of the engine 1 without providing any external piping.

Numerals 8a denote oil seals provided near each end portion of the bearing hole 8.

In the illustrated embodiment the turbine 3 and the compressor 5 are apart from one another with the body of the engine between them. An exhaust port 2a connected to the exhaust passage 2 and an intake port 4a connected to the intake passage 4 are also disposed apart from one another so that the engine 1 is of a cross flow type. As a consequence, piping for the exhaust turbine 3 and for the compressor 5 is facilitated, and also consequently both the exhaust passage 2 and a turbine scroll of the exhaust turbine 3 which have comparatively high operating temperatures are set apart from the intake passage 4 which should be protected from rising temperature.

In the foregoing example, the engine 1 is an inline two-cylinder engine in which, as shown clearly in Figure 2, two cylinders 1a, 1a are disposed in line and the bearing hole 8 extends at right angles to a crankshaft 10 through an intermediate portion of the body between the two cylinders.

In the form shown in Figures 3 to 5 the engine 1 is a V-type two cylinder engine in which the two cylinders 1b, 1b are disposed in a V-formation.

Figure 6 shows the supercharger 7 and engine 1 as shown in Figures 3 to 5 mounted in a motorcycle, the exhaust turbine 3 being positioned on the front of the engine 1, and the compressor 5 being positioned on the rear of the engine. Accordingly, the exhaust opening of the turbine 3 is forwardly directed, and the bearing hole 8 extends between the front and the rear of the engine, through a bottom portion 11 of a V-bank formed between the two cylinders 1b, 1b.

In all the engines illustrated the exhaust ports 2a of the individual cylinders are, in each case, in communication with a single intake opening 3a of the turbine 3.

In the Figures, numeral 12 denotes an air cleaner provided on an upstream end portion of the intake passage 4, and numeral 13 denotes an expansion chamber provided on a downstream end portion of the intake passage 4 connected through the compressor 5 to the air cleaner 12.

## Claims

1. A multi-cylinder reciprocating internal combustion engine (1) provided with supercharger apparatus (7) comprising an exhaust gas driven turbine (3) provided in an exhaust passage (2) of the engine and having a single intake opening (3a) in communication with the exhaust ports (2a) of the respective cylinders (1a, 1a; 1b, 1b) of the engine, a compressor (5) provided in an intake passage (4) of the engine, and a lubrication oil passage (9) provided in the body of the engine for supplying lubricating oil to shafting interconnecting the turbine and the compressor; characterised in that the turbine (3) and the compressor (5) are interconnected by a shaft (6) that is disposed between two cylinders of the engine (1) and that passes through, so as to be supported only by, a bearing hole (8) in the body of the engine, the lubrication oil passage being in communication with this bearing hole.

2. A supercharged internal combustion engine as claimed in claim 1, wherein the body of the engine (1) is disposed between the exhaust port (2a) of each cylinder and an intake port (4a) of each cylinder so that the engine (1) is of cross flow type.

3. A supercharged internal combustion engine as claimed in claim 1 or 2, wherein the engine (1) is an in-line multi-cylinder engine with its plurality of cylinders (1a, 1a) disposed in line, and wherein the bearing hole (8) extends through an intermediate portion of the body between these cylinders (1a, 1a).

4. A supercharged internal combustion engine as claimed in claim 1, in a vehicle, wherein the engine (1) is a V-type multi-cylinder engine with its plurality of cylinders (1b, 1b) disposed in a V-formation between the front and the rear of the engine, with respect to the intended direction of forward travel of the vehicle, so as to extend at right angles thereto; and wherein the bearing hole (8) extends between the front and the rear through a bottom portion (11) of a V-bank formed between these cylinders (1b, 1b).

5. A supercharged internal combustion engine as claimed in claim 4, in a vehicle, such that the engine exhaust passage (2) and the turbine (3) are at the front, and the intake passage (4) and the compressor (5) are at the rear, of the engine with respect to the intended direction of forward travel of the vehicle so that the turbine (3) is ahead of the compressor (5), the turbine (3) having its exhaust opening which is in communication with the engine exhaust passage (2) forwardly directed.

## Patentansprüche

1. Mehrzylinder-Hubkolben-Verbrennungsmotor (1), mit einer Ladeeinrichtung (7) versehen ist, mit einer abgasgetriebenen Turbine (3), die in einem Abgasdurchlaß (2) des Motors vorgesehen ist und eine einzige Einlaßöffnung (3a) aufweist, welche in Verbindung mit den Abgasdurchlässen (2a) der betreffenden Zylinder (1a, 1a; 1b, 1b) des Motors steht, einem Kompressor (5), der in einem Einlaßdurchlaß (4) des Motors vorgesehen ist, und einem Schmierölkanal (9), der in dem Körper des Motors zum Zuführen von Schmieröl zu einer Wellenanordnung vorgesehen ist, die die Turbine und den Kompressor miteinander verbindet, dadurch gekennzeichnet, daß die Turbine (3) und der Kompressor (5) durch eine Welle (6) miteinander verbunden sind, die zwischen zwei Zylindern des Motors (1) angeordnet ist und so durch diesen verläuft, daß sie nur durch ein Lagerloch (8) in dem Körper des Motors gelagert ist, wobei der Schmierölkanal in Verbindung mit dem Lagerloch steht.

2. Kompressor-Verbrennungsmotor nach Anspruch 1, bei dem der Körper des Motors (1) zwischen dem Abgasdurchlaß (2a) jedes der Zylinder und einer Einlaßöffnung (4a) jedes der Zylinder angeordnet ist, so daß der Motor (1) vom Querstromtyp ist.

3. Kompressor-Verbrennungsmotor nach Anspruch 1 oder 2, wobei der Motor (1) ein Reihen-Mehrzylinder-Motor ist, dessen Zylinder (1a, 1a) in Reihe angeordnet sind, und wobei sich das Lagerloch (8) durch einen Zwischenbereich des Körpers zwischen diesen Zylindern (1a, 1a) erstreckt.

4. Kompressor-Verbrennungsmotor nach Anspruch 1, in einem Fahrzeug, wobei der Motor (1) ein Mehrzylinder-V-Motor ist, dessen Zylinder (1b, 1b) derart in einer V-Anordnung zwischen der Vorderseite und der Rückseite in bezug auf eine bestimmte Richtung der Vorwärtsbewegung des Fahrzeugs angeordnet sind, daß sie sich unter rechten Winkeln dazu erstrecken, und wobei sich das Lagerloch (8) zwischen der Vorderseite und der Rückseite durch einen Bodenabschnitt (1) eines V-Körpers erstreckt, der zwischen diesen Zylindern (1b, 1b) gebildet ist.

5. Kompressor-Verbrennungsmotor nach Anspruch 4, in einem Fahrzeug, dergestalt, daß der Motor-Abgasdurchlaß (2) und die Turbine (3) die Vorderseite und der Einlaßdurchlaß (4) und der Kompressor (5) die Rückseite des Motors in bezug auf eine bestimmte Richtung der Vorwärtsbewegung des Fahrzeugs bilden, so daß sich die Turbine (3) vor dem Kompressor (5) befindet, wobei die mit dem Motor-Abgasdurchlaß (2) in Verbindung stehende Abgasöffnung der Turbine (3) nach vorn gerichtet ist.

## Revendications

1. Moteur à combustion interne alternatif poly-cylindrique (1) équipé d'un turbocompresseur à suralimentation (7) comprenant une turbine entraînée par les gaz d'échappement (3) placée dans un passage d'échappement (2) du moteur et ayant un orifice d'admission unique (3a) en communication avec les orifices d'échappement (2a) des cylindres respectifs (1a, 1a; 1b, 1b) du moteur, un compresseur (5) placé dans un passage d'admission (4) du moteur, et un passage d'huile lubrifiante (9) prévu dans le corps du moteur pour amener l'huile lubrifiante à la transmission reliant la turbine et le compresseur entre eux; caractérisé en ce que la turbine (3) et le compresseur (5) sont reliés entre eux par un arbre (6) qui est situé entre deux cylindres du moteur (1) et passe à travers, de manière à être supporté uniquement par, un trou de palier (8) dans le corps du moteur, le passage d'huile lubrifiante étant en communication avec ce trou de palier.

2. Moteur à combustion interne suralimenté comme revendiqué dans la revendication 1, dans lequel le corps du moteur (1) est placé entre l'orifice d'échappement (2a) de chaque cylindre et un orifice d'admission (4a) de chaque cylindre de sorte que le moteur (1) est de type à courant transversal.

3. Moteur à combustion interne suralimenté comme revendiqué dans la revendication 1 ou 2, dans lequel le moteur (1) est un moteur à plusieurs cylindres en ligne, son ensemble de cylindres (1a, 1a) étant placé en ligne, et dans lequel le trou de palier (8) s'étend à travers une partie intermédiaire du corps entre ces cylindres (1a, 1a).

4. Moteur à combustion interne suralimenté comme revendiqué dans la revendication 1, dans un véhicule, dans lequel le moteur (1) est un moteur à plusieurs cylindres en V, son ensemble de cylindres (1b, 1b) étant placé dans une configuration en V entre l'avant et l'arrière du moteur, par rapport au sens de marche en avant du véhicule, de manière à s'étendre à angle droit par rapport à lui; et dans lequel le trou de palier (8) s'étend entre l'avant et l'arrière à travers une partie (11) au-dessus d'une entaille en V formée entre ces cylindres (1b, 1b).

5. Moteur à combustion interne suralimenté comme revendiqué dan la revendication 4, dans un véhicule, de manière que le passage d'échappement du moteur (2) et la turbine (3) sont à l'avant, et le passage d'admission (4) et le compresseur (5) sont à l'arrière, du moteur par rapport au sens de marche en avant du véhicule de sorte que la turbine (3) est en avant du compresseur (5), la turbine (3) ayant son orifice d'échappement qui est en communication avec le passage d'échappement de moteur (2) dirigé en avant.

FIG.1 FIG.2 FIG.3 FIG.4 FIG.5

# FIG.6

0 039 182